# EUROPEAN PATENT APPLICATION

(11) **EP 3 431 755 A1**
(43) Date of publication of application: **23.01.2019**
(21) Application number: 17182110.1
(22) Date of filing: 19.07.2017
(51) Int. Cl.: F03D 5/00, B64C 31/06, B64C 39/02, F03B 17/06

(54) **KITE BASED POWER GENERATION SYSTEM**

(71) Applicant: Vestel Elektronik Sanayi ve Ticaret A.S., 45030 Manisa (TR)
(72) Inventor: Kuralay, Fatih, 45030 Manisa (TR); Demir, Fatih, 45030 Manisa (TR)
(74) Representative: Schmidt, Steffen J.

(57) **Abstract**

The present disclosure relates to a kite based power generation system (100) which comprises a first kite (102) and a second kite (104) connected to each other using a tether (106), the tether (106) running via a base station (108) comprising an electrical power generator (110), and a controller (112) configured to control the first kite (102) and the second kite (104) to be lifted alternatingly with respect to the base station (108), wherein the electrical power generator (110) is driven by the tether (106) to generate power.

## Description

### Technical Field

The present disclosure generally relates to the field of energy production. More particularly, the present disclosure relates to a kite based power generation system which produces energy from the relative movement of two kites to one another.

### Background

Over the recent years, there has been an increasing trend in the power industry away from the use of fossil energy to the employment of renewable energy sources for power production. Renewable energy is energy that is collected from renewable resources which are naturally replenished on a human timescale, such as sunlight, wind, rain, tides, waves, and geothermal heat, for example. In many regions over the world, renewable energy power plants, including solar power plants, wind farms, or the like, have been established and deliver increasing portions of the overall power supply in these regions.

Renewable energy power production is still an emerging area, however, in which further innovation is needed to achieve a more widespread adoption of the corresponding technologies. It is thus an object of the present disclosure to provide a power generation system that advances available concepts of renewable energy production.

### Summary

According to the present disclosure, a kite based power generation system is provided. The system comprises a first kite and a second kite connected to each other using a tether, the tether running via a base station comprising an electrical power generator, and a controller configured to control the first kite and the second kite to be lifted alternatingly with respect to the base station, wherein the electrical power generator is driven by the tether to generate power.

A kite may be a tethered craft which comprises at least one wing with a surface that reacts against the flow of an environmental medium, such air or water. The wing surface of an airborne kite, for example, may react against the flow of air to create lift and drag. Lift may be generated when - at an appropriate angle of the wing with respect to the airflow - air moves around the wing surface, producing low pressure above and high pressure below the wing. The force generated due to the pressure difference between the lower side and the upper side of the wing may be denoted as lift force. Any lift force exceeding the gravity force of the kite may sustain the kite in flight. The interaction with the airflow may also generate a horizontal drag along the direction of the wind. The resulting force may be denoted as drag force. The force vector resultant from the lift and drag force components may be opposed by the tension of a tether to which the kite is attached. The length of the tether may be controlled from a base station to define a desired altitude of the kite (or, more generally, a desired distance of the kite with respect to the base station). The same principles may apply to kites that are used in fluid flows, such as underwater kites, for example, that can react against water flows in an equivalent manner.

In the power generation system of the present disclosure, a first kite and a second kite may be employed and their relative movement to one another may be used to generate power. For this purpose, rather than fixing the first kite and the second kite to the base station using a separate tether per kite, a tether may be used which runs via the base station and which connects the first kite and the second kite to one another. Depending on the force balance between the first and the second kite, one kite may then drag the other kite in the movement direction of the one kite. For example, if the lift force of the first kite is greater than the lift force of the second kite, the first kite may be lifted with respect to the base station and drag - via the tether - the second kite so that the second kite is lowered with respect to the base station at the same time. When, on the other hand, the lift force of the second kite becomes greater again and exceeds the lift force of the first kite, the movement direction of the tether may be reversed and, now, the second kite may be lifted with respect to the base station, dragging the first kite so that the first kite is lowered with respect to the base station. The base station may be a ground station, for example.

The resulting movement of the tether may be used to drive the electrical power generator provided at the base station to generate power. More specifically, when the first kite and the second kite are lifted alternatingly with respect to the base station in a repeated manner, the resulting reciprocating movement of the tether may be used by the electrical power generator to generate power in a continuous manner, e.g., without major variations in the amount of energy produced or at least without substantial breaks in the production of energy over time.

To achieve a flight behavior in which the first kite and the second kite are lifted alternatingly with respect to the base station, the first kite and the second kite may be controlled by the controller of the power generation system. The controller may be provided at the base station and may be capable of controlling the trajectories of the kites as needed. The controller may comprise at least one computing unit which may be configured to transmit signals to the first kite and the second kite to control their flight behavior. In one variant, the signals may be transmitted using wireless transmission technologies, such as via mobile communication networks or satellite transmission, e.g., depending on the distance between the respective kite and the base station. In another variant, the signals may be transmitted using wire bound transmission, wherein corresponding signal lines may be run along the tether, for example.

Controlling the first kite and the second kite to move along desired trajectories can be realized in various ways. In particular, controlling the first kite and the second kite to be lifted alternatingly may comprise increasing and decreasing lift forces of the first kite and the second kite in an alternating manner. For example, the controller may be configured to increase the lift force of the first kite and decrease the lift force of the second kite so that the lift force of the first kite exceeds the lift force of the second kite. In this case, the first kite may be lifted with respect to the base station while the second kite is dragged by the first kite and lowered with respect to the base station. On the other hand, the controller may be configured to decrease the lift force of the first kite and increase the lift force of the second kite so that the lift force of the second kite exceeds the lift force of the first kite. In this case, the second kite may be lifted with respect to the base station while the first kite is dragged by the second kite and lowered with respect to the base station.

The decision on whether to increase or decrease the lift force of the first kite and the second kite may be made by determining which of the first kite and the second kite has a greater distance from the base station (e.g., has a higher altitude). In this case, the lift force of the kite whose distance to the base station is currently greater may be decreased and the lift force of the other kite may be increased. In one particular such variant, the lift force of the first kite may be decreased and the lift force of the second kite may be increased when the first kite reaches a maximum distance from the base station. Once a decision on whether to increase or decrease the lift force of the respective kite is made, the controller may transmit corresponding control signals to the first kite and the second kite (e.g., using wireless transmission or wire bound transmission, as explained above) in order to control corresponding actuators of the kites that implement the requested adjustment of the lift force.

In one variant, the lift force of the respective kite may be adjusted by increasing or decreasing a surface area of the at least one wing of the respective kite. In particular, when the respective kite is lifted, the surface area of the at least one wing of the respective kite may be maximized. The adjustability of the surface area of a wing may be realized by different techniques. For example, the wing of the respective kite may be foldable and increasing or decreasing the surface area of the wing may comprise unfolding or folding the wing of the respective kite, respectively. Unfolding the wing may particularly comprise unfolding the wing entirely and folding the wing may comprise partially folding the wing to an extent that is sufficient to prevent the kite from falling to ground, for example. In another variant, it is conceivable that the wing may comprise an extension surface which may be (e.g., laterally) driven out of or into the wing to increase or decrease the effective surface area of the wing.

The respective kite may be kept on a substantially linear trajectory in which the distance of the kite to the base station increases and decreases in an alternating manner (i.e., without substantial lateral movements deviating from the linear trajectory). Such trajectory may be accomplished by alternatingly increasing and decreasing surface area of the wings of the respective kites, as described above. In another variant, the lift force of the respective kite may be adjusted by changing a posture of the respective kite with respect to the flow direction of the environmental medium (e.g., wind or water). In particular, the posture of the respective kite may be controlled repeatedly to move the respective kite along a trajectory which alternates in distance from the base station. By successively changing the posture of the respective kite in such manner, the respective kite may be caused to move along a non-linear trajectory, i.e., a trajectory including lateral movements. For example, the respective kite may be controlled to move along a trajectory in the form of a crosswind eight or a crosswind circle which is traversed by the respective kite in a loop-wise manner. Corresponding control of the kite may be realized using steering lines connected to the kite or using actuators provided at the kite that may modify the wing shape to change the kite's flight characteristics, for example. Steering lines and actuators may be controlled by the controller of the power generation system.

As mentioned above, when the first kite and the second kite are lifted alternatingly with respect to the base station, the resulting reciprocating movement of the tether may be used by the electrical power generator of the power generation system to generate power in a continuous manner. The electrical power generator may thus be configured to be continuously drivable by a reciprocating movement of the tether. A conversion mechanism may be provided which converts the reciprocating movement of the tether into a continuous driving force for driving the electrical power generator. The electrical power generator may take the form of a dynamo or alternator that converts the received mechanical energy to electrical energy in the form of direct current or alternating current, respectively. As regards the tether, the tether may be provided in the form of a single line that runs all the way from the first kite to the second kite. It will be understood, however, that the tether may also be composed of portions that are linked together.

As the working principles of a kite may apply in combination with flows of different environmental mediums in an equivalent manner, such as air or water, it will be understood that the power generation system of the present disclosure may be employed in various environments. In one variant, the power generation system may be a wind based power generation system, wherein the first kite and the second kite may be airborne kites which may be lifted with respect to the base station by wind power. In another variant, the power generation system may be a water based power generation system, wherein the first kite and the second kite may be underwater kites which may be lifted with respect to the base station by water power.

### Brief Description of the Drawings

In the following, the present disclosure will further be described with reference to exemplary implementations illustrated in the figures, in which:
- Figure 1: illustrates a schematic overview of an exemplary kite based power generation system according to the present disclosure; and
- Figure 2: illustrates a flow diagram corresponding to a method which may be performed by the controller of the power generation system of Figure 1.

### Detailed Description

In the following description, for purposes of explanation and not limitation, specific details are set forth in order to provide a thorough understanding of the present disclosure. It will be apparent to one skilled in the art that the present disclosure may be practiced in other implementations that depart from these specific details.

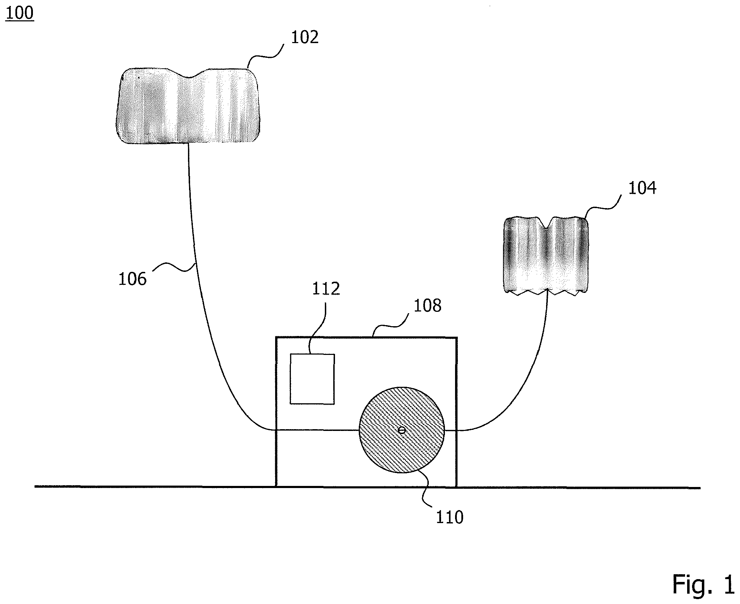

Figure 1 illustrates a schematic overview of an exemplary kite based power generation system 100 according to the present disclosure. The kite based power generation system 100 comprises a first kite 102 and a second kite 104 which are connected to one another using a tether 106. In the example shown, both the first kite 102 and the second kite 104 are airborne kites with wings that react against airflow, such as passing winds, to create lift and drag of the kites 102 and 104, respectively. Lift may be generated when - at an appropriate angle of the respective wing with respect to the airflow - air moves around the wing surface, producing low pressure above and high pressure below the wing. The resulting pressure difference generates a lift force which keeps the kites 102 and 104 in the air.

The tether 106 runs from the first kite 102 to the second kite 104 via a base station 108 located on the ground. In the base station 108, an electrical power generator 110 is arranged which is drivable to generate power from a relative movement of the kites 102 and 104 to one another, more specifically, from a reciprocating movement of the tether 106 when the first kite 102 and the second kite 104 are lifted alternatingly with respect to the base station 108. The reciprocating movement of the tether 106 may be caused by controlling the flight behavior of the first kite 102 and the second kite 104. For this purpose, the kite based power generation system 100 comprises a controller 112 which is capable of controlling the trajectories of the kites 102 and 104 as needed. The controller 112 may transmit control signals to the kites 102 and 104 to control the flight behavior of the kites 102 and 104 accordingly. The signals may be transmitted using wireless transmission technologies, such as via mobile communication networks or satellite transmission, for example. In another variant, the signals may be transmitted using wire bound transmission through signal lines that may be run along the tether 106, for example.

To control the first kite 102 and the second kite 104 to be lifted alternatingly with respect to the ground station, the controller 112 may increase or decrease the lift forces acting on the first kite 102 and second kite 104 in an alternating manner. For example, the controller 112 may increase the lift force of the first kite 102 and increase the lift force of the second kite 104 so that the lift force of the first kite 102 exceeds the lift force of the second kite 104. In this case, the first kite 102 may be lifted with respect to the base station 108 while the second kite 104 is dragged by the first kite 102 via the tether 106 and lowered with respect to the base station 108.

This corresponds to the situation shown in Figure 1. The controller 112 may then decrease the lift force of the first kite 102 and increase the lift force of the second kite 104 so that the lift force of the second kite 104 becomes greater until is exceeds the lift force of the first kite 102. In this case, the second kite 104 may be lifted with respect to the base station 108 while the first kite 102 is dragged by the second kite 104 and lowered with respect to the base station 108. In other words, by repeatedly changing the force balance between the lift forces acting on the first kite 102 and the second kite 104, the first kite 102 and the second kite 104 may be lifted alternatingly to drive the electrical power generator 110 in a continuous manner.

The electrical power generator 110 is configured to be continuously drivable by the reciprocating movement of the tether 106 and a conversion mechanism may be provided which converts the reciprocating movement of the tether 106 into a continuous driving force for driving the electrical power generator 110. The electrical power generator 110 may work according to the principles of a dynamo or an alternator that converts the received mechanical energy from the tether 106 to electrical energy in the form of direct current or alternating current, respectively. The tether 106 may be provided in the form of a single line that runs all the way from the first kite 102 to the second kite 104. It will be understood, however, that the tether 106 may also be composed in a piece-wise manner using multiple tether portions that are linked together.

To adjust the lift forces of the kites 102 and 104, the surface areas of the wings of the first kite 102 and the second kite 104 may be increased or decreased. More specifically, in the example of Figure 1, the wings of the kites 102 and 104 are foldable and the surface area of the respective wing may be adjusted by folding or unfolding the respective wing. In the situation shown, the wing of the first kite 102 is currently in an unfolded state and the surface area of the wing of the first kite 102 is thus maximized. The wing of the second kite 104, on the other hand, is partially folded so that the surface area of the second kite 104 is less than the surface area of the wing of the first kite 102 (although the first kite 102 and the second kite 104 may otherwise be identical in construction). The extent of the partial folding of the wing of the second kite 104 may be such that the lift force generated at the wing is still sufficient to prevent the second kite 104 from falling to ground. To adjust the wing surface areas of the kites 102 and 104, the controller 112 may transmit corresponding control signals to the kites 102 and 104 (e.g., using wireless transmission or wire bound transmission, as explained above) in order to control corresponding actuators provided at the kites 102 and 104 that implement the requested folding or unfolding action. By alternatingly increasing and decreasing the surface of the wings of the kites 102 and 104 in this manner, the kites 120 104 may be kept on a substantially linear trajectory in which the vertical distance of the kites 102 and 104 to the base station 108 may increase and decrease in an alternating manner (i.e., without substantial lateral movements deviating from the linear trajectory).

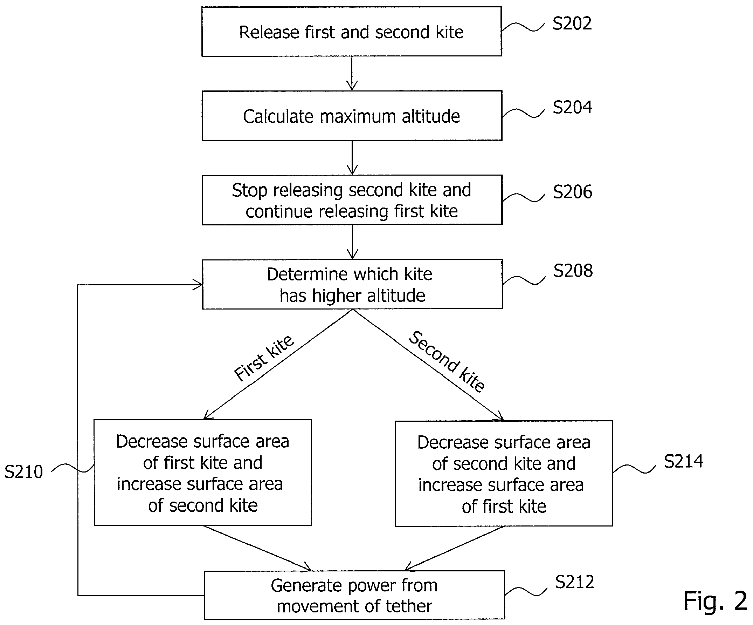

Figure 2 illustrates a flow diagram of an exemplary method which may be performed by the controller 112 of the power generation system 100 to control the first kite 102 and the second kite 104 to be lifted alternatingly with respect to the base station 108. At an initial state, the kites 102 and 104 may reside at the base station 108 and may be ready for launch. To trigger the production of energy, the controller 112 releases, in step S202, the first kite 102 and the second kite 104 to allow the kites 102 and 104 to lift off the ground. In an optional step S204, the controller 112 may then calculate a maximum altitude of the kites 102 and 104, e.g., an altitude which the kites 102 and 104 may not exceed. This altitude may be an optimum altitude that depends on the weather situation and currently available winds, for example. In step S206, releasing of the second kite 104 may be stopped while releasing the first kite 102 may be continued until the first kite 102 reaches the maximum altitude.

Then, a loop is entered in which it is repeatedly determined, in step S208, which of the first kite 102 and the second kite 104 has a higher altitude. In case the first kite 102 has a higher altitude, the lift force of the first kite 102 is currently greater than the lift force of the second kite 104. Thus, in order to alternate the lifting procedure, the lift forces of the first kite 102 and the second kite 104 are adjusted, in step S210, by decreasing the surface area of the first kite 102 and increasing the surface area of the second kite 104 to an extent at which the lift force of the second kite 104 becomes greater than the lift force of the first kite 102 so that the movement direction of the tether 106 is reversed and the second kite is lifted with respect to the base station 108. The resulting movement of the tether 106 is then used, in step S212, to drive the electrical power generator 110 in the base station 108 until the second kite 102 reaches the maximum altitude. It is then determined again, in step S208, which of the first kite 102 and the second kite 104 has a higher altitude. Since now, the second kite 104 has a higher altitude, the lift forces of the first kite 102 and the second kite 104 are adjusted, in step S214, by decreasing the surface area of the second kite 104 and increasing the surface area of the first kite 102 to an extent at which the lift force of the first kite 102 becomes greater than the lift force of the second kite 104 so that the movement direction of the tether 106 is reversed again.

By repeatedly controlling the first kite 102 and the second kite 104 according to this control loop, the first kite 102 and the second kite 104 take turns in being lifted and lowered with respect to the base station 108. The resulting reciprocating movement of the tether is used by the electrical power generator 110 to generate power in a continuous manner, e.g., without major variations in the amount of energy produced or at least without substantial breaks in the production of energy over time.

It will be understood that the embodiments described above are merely exemplarily and that the principles of the present disclosure may be practiced in other implementations. For example, rather than providing a folding mechanism, the surface area adjustment of the kites 102 and 104 could also be implemented using a mechanism in which the wing comprises an extension surface that may be driven out to increase or decrease the effective surface area of the wing. Also, it will be appreciated that the substantially linear trajectory of the kites 102 and 104 is just one example of a trajectory that may be used to realize an alternating lifting movement of the kites 102 and 104. In another variant, it may be conceivable to adjust the lift force of the kites 102 and 104 by changing the posture of the kites with respect to the flow direction of the air. By successively changing the posture of the kites, the kites may be caused to move along a predetermined non-linear trajectory, i.e., a trajectory including lateral movements such as a crosswind eight or a crosswind circle which may be traversed by the kites in a loop-wise manner. Finally, although the above embodiments have been described with regard to a wind based power generation system with airborne kites, it will be understood that the present disclosure shall not be limited in this regard and that the principles presented herein may be practiced with power generation systems that make use of other environmental mediums, such as water power generation systems, for example, in which underwater kites can be lifted by water power.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A kite based power generation system (100), comprising:
a first kite (102) and a second kite (104) connected to each other using a tether (106), the tether (106) running via a base station (108) comprising an electrical power generator (110); and
a controller (112) configured to control the first kite (102) and the second kite (104) to be lifted alternatingly with respect to the base station (108), wherein the electrical power generator (110) is driven by the tether (106) to generate power.

2. The power generation system (100) of claim 1, wherein controlling the first kite (102) and the second kite (104) to be lifted alternatingly comprises increasing and decreasing lift forces of the first kite (102) and the second kite (104) in an alternating manner.

3. The power generation system (100) of claim 2, wherein, when the first kite (102) reaches a maximum distance from the base station (108), the lift force of the first kite (104) is decreased and the lift force of the second kite (104) is increased (S210) so that the first kite (102) is lowered with respect to the base station (108) and second kite (104) is lifted with respect to the base station (108).

4. The power generation system (100) of claim 2 or 3, wherein the lift force of the respective kite (102, 104) is adjusted by increasing or decreasing a surface area of a wing of the respective kite (102, 104).

5. The power generation system (100) of claim 4, wherein, when the respective kite (102, 104) is lifted, the surface area of the wing of the respective kite (102, 104) is maximized.

6. The power generation system (100) of claim 4 or 5, wherein the wing of the respective kite (102, 104) is foldable, and wherein increasing or decreasing the surface area of the wing comprises unfolding or folding the wing of the respective kite (102, 104), respectively.

7. The power generation system (100) of any one of claims 2 to 6, wherein the lift force of the respective kite (102, 104) is adjusted by changing a posture of the respective kite (102, 104).

8. The power generation system (100) of claim 7, wherein the posture of the respective kite (102, 104) is controlled to move the respective kite (102, 104) along a trajectory which alternates in distance from the base station (108).

9. The power generation system (100) of any one of claims 1 to 8, wherein the electrical power generator (110) is configured to be continuously drivable by a reciprocating movement of the tether (106).

10. The power generation system (100) of any one of claims 1 to 9, wherein the power generation system (100) is a wind based power generation system, wherein the first kite (102) and the second kite (104) are lifted with respect to the base station (108) by wind power.

11. The power generation system (100) of any one of claims 1 to 9, wherein the power generation system (100) is a water based power generation system, and wherein the first kite (102) and the second kite (104) are lifted with respect to the base station (108) by water power.

## Amended claims

### Amended claims in accordance with Rule 137(2) EPC.

1. A kite based power generation system (100), comprising:
a first kite (102) and a second kite (104) connected to each other using a tether (106), the tether (106) running via a base station (108) comprising an electrical power generator (110); and
a controller (112) configured to control the first kite (102) and the second kite (104) to be lifted alternatingly with respect to the base station (108), wherein controlling the first kite (102) and the second kite (104) to be lifted alternatingly comprises increasing and decreasing lift forces of the first kite (102) and the second kite (104) in an alternating manner, and wherein the electrical power generator (110) is driven by the tether (106) to generate power,
**characterized in that** the lift force of the respective kite (102, 104) is adjusted by increasing or decreasing a surface area of a wing of the respective kite (102, 104).

2. The power generation system (100) of claim 1, wherein, when the first kite (102) reaches a maximum distance from the base station (108), the lift force of the first kite (104) is decreased and the lift force of the second kite (104) is increased (S210) so that the first kite (102) is lowered with respect to the base station (108) and second kite (104) is lifted with respect to the base station (108).

3. The power generation system (100) of claim 1 or 2, wherein, when the respective kite (102, 104) is lifted, the surface area of the wing of the respective kite (102, 104) is maximized.

4. The power generation system (100) of any one of claims 1 to 3, wherein the wing of the respective kite (102, 104) is foldable, and wherein increasing or decreasing the surface area of the wing comprises unfolding or folding the wing of the respective kite (102, 104), respectively.

5. The power generation system (100) of any one of claims 1 to 4, wherein the lift force of the respective kite (102, 104) is adjusted by changing a posture of the respective kite (102, 104).

6. The power generation system (100) of claim 5, wherein the posture of the respective kite (102, 104) is controlled to move the respective kite (102, 104) along a trajectory which alternates in distance from the base station (108).

7. The power generation system (100) of any one of claims 1 to 6, wherein the electrical power generator (110) is configured to be continuously drivable by a reciprocating movement of the tether (106).

8. The power generation system (100) of any one of claims 1 to 7, wherein the power generation system (100) is a wind based power generation system, wherein the first kite (102) and the second kite (104) are lifted with respect to the base station (108) by wind power.

9. The power generation system (100) of any one of claims 1 to 7, wherein the power generation system (100) is a water based power generation system, and wherein the first kite (102) and the second kite (104) are lifted with respect to the base station (108) by water power.
